# EUROPÄISCHE PATENTSCHRIFT

(11) **EP 4 496 938 B1**
(45) Veröffentlichungstag und Bekanntmachung des Hinweises auf die Patenterteilung: **26.11.2025**
(21) Anmeldenummer: 23710310.6
(22) Anmeldetag: 08.03.2023
(51) Int. Cl.: F01D 9/04, F01D 17/16, F02C 6/12, F01D 25/24

(54) **DÜSENRING FÜR EINE RADIALTURBINE, ABGASTURBINE UND ABGASTURBOLADER**
NOZZLE RING FOR A RADIAL TURBINE, EXHAUST GAS TURBINE AND EXHAUST GAS TURBOCHARGER
COURONNE DE GUIDAGE POUR UNE TURBINE RADIALE, TURBINE À GAZ D'ÉCHAPPEMENT ET TURBOCOMPRESSEUR À GAZ D'ÉCHAPPEMENT

(30) Priorität: 22.03.2022 EP 22163576
(43) Veröffentlichungstag der Anmeldung: 29.01.2025
(73) Patentinhaber: Accelleron Switzerland Ltd., 5400 Baden (CH)
(72) Erfinder: GEIST, Nico, 79872 Bernau im Schwarzwald (DE); MAURER, Florian, 5400 Baden (CH); PINZI, Davide, 5420 Ehrendingen (CH)
(74) Vertreter: Zimmermann & Partner Patentanwälte mbB
(86) Internationale Anmeldenummer: PCT/EP2023/055884
(87) Internationale Veröffentlichungsnummer: WO 2023/180071

(56) Entgegenhaltungen:
- DE-A1- 102011 108 195
- DE-A1- 19 703 033
- DE-T5- 112017 004 220
- JP-A- 2009 243 375

## Beschreibung

### TECHNISCHES GEBIET

Die Erfindung bezieht sich auf das Gebiet der Abgasturbolader mit einer Abgasturbine, insbesondere Radialturbine. Insbesondere betrifft die Erfindung einen Düsenring für eine Radialturbine.

### TECHNISCHER HINTERGRUND

Für die Leistungssteigerung einer Brennkraftmaschine werden heutzutage standardmäßig Abgasturbolader eingesetzt, mit einer Turbine im Abgastrakt der Verbrennungskraftmaschine und mit einem der Verbrennungskraftmaschine vorgelagerten Verdichter. Die Abgase der Brennkraftmaschine werden dabei in der Turbine entspannt. Die dabei gewonnene Arbeit wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, können der Verbrennungsprozess und der Wirkungsgrad der Brennkraftmaschine optimiert werden.

Die kinetische und thermische Energie des Abgases wird dazu verwendet, um den Rotor des Turboladers anzutreiben. Um einen sicheren Betrieb gewährleisten zu können muss der Abgasstrahl gezielt auf die Turbinenwelle geführt werden. Zu diesem Zweck sowie zur Ermöglichung einer thermodynamischen Anpassung des Turboladers für unterschiedliche Anwendungen, wird bei radialen Turbinenstufen am Austritt des Strömungskanals vor der Turbinenwelle ein Düsenring eingebaut. Das Abgas wird durch den, der Turbine vorgeschalteten Düsenring der Turbine zugeführt. Die Düsenringbeschaufelung nimmt Einfluss auf die Charakteristik des Turboladers. Für verschiedene Anwendungen kommen verschiedene Düsenringe zum Einsatz.

Die Turbinen- bzw. Gaseintrittsgehäuse sind üblicherweise Gussteile, die im Verfahren des Sandgusses hergestellt werden. Der Strömungskanal im Gehäuseinneren wird in diesem Verfahren über einen sogenannten Kern in der Gussform abgebildet. Dieser Kern ist mit der Aussenkontur der Gussform verbunden. Diese Verbindung wird als sogenannter Kernspalt bezeichnet. Der Kernspalt befindet sich im Bauteil an der Position, an welcher der Düsenring im Turbolader angeordnet ist. Aus verfahrenstechnischen Gründen muss der Kernspalt einen Mindestquerschnitt aufweisen, um eine ausreichende Stabilität der Verbindung zur Aussenform zu gewährleisten.

Es hat sich gezeigt, dass bei kleinen Turbinenradschaufelhöhen (Trim) im Bereich zwischen Düsenring und Turbinenrad (= Kernspaltbereich der Gussform) eine Strömungskontur erforderlich ist, die aus dem vorhandenen Rohteil nicht hergestellt werden kann, da das Rohteil nicht genügend Material bereitstellt. Eine Anpassung des Rohteils ist aus gusstechnischen Gründen nicht möglich, da eine solche Anpassung den Kernspalt auf einen Querschnitt reduzieren würde, mit welchem das Gehäuse nicht mehr herstellbar wäre.

Die Aufgabe der vorliegenden Erfindung besteht darin, eine Lösung für das obengenannte Problem bereitzustellen.

Zum Stand der Technik wird auf die Patentdokumente DE 197 03 033 A1, JP 2009-243375 A, DE 102011 108 195 A1, und DE 11 2017 004 220 T5 verwiesen. Dokument DE 197 03 033 A1 betrifft eine Abgasturbine eines Turboladers, mit einem aus einem Gaseintrittgehäuse, einem Gasaustrittgehäuse sowie zumindest einem turbinenseitigen Gehäusebauteil bestehenden Turbinengehäuse, einem auf einer Welle drehbar gelagerten Turbinenrad mit Laufschaufeln, einem im Turbinengehäuse, stromauf des Turbinenrades ausgebildeten Einströmkanal für die Abgase einer mit dem Turbolader verbundenen Brennkraftmaschine sowie mit einen im Einströmkanal angeordneten, in einer Ausnehmung des Turbinengehäuses befestigten, die Abgase auf die Laufschaufeln leitenden Düsenring. Zwischen dem Turbinengehäuse und dem Düsenring ist ein Dehnungsspalt ausgebildet und im Bereich des Dehnungsspaltes ist zumindest eine Dichtung angeordnet. Dokument JP 2009-243375 A zielt darauf ab einen Kompressor bereitzustellen, der einen stabilen Betrieb ermöglicht, indem der Kontakt zwischen einer Endfläche einer Düsenschaufel und einem ersten oder zweiten ringförmigen Abschnitt geeignet unterdrückt wird. JP 2009-243375 A beschreibt einen Kompressor mit variablem Hubraum der dadurch gekennzeichnet, dass: in einem Düsenstützring ein erstes Lagerloch vorgesehen ist, in das ein mit der Düsenschaufel verbundener erster Wellenabschnitt eingesetzt ist; in einer Abdeckung ein zweites Lagerloch vorgesehen ist, in das ein mit der Düsenschaufel verbundener zweiter Wellenabschnitt eingesetzt ist, wobei das zweite Lagerloch eine Mittelachse aufweist, die mit einer Mittelachse des ersten Lagerlochs identisch ist; und ein zwischen dem zweiten Wellenabschnitt und dem zweiten Lagerloch gebildeter zweiter Abstand größer ist als ein zwischen dem ersten Wellenabschnitt und dem ersten Lagerloch gebildeter erster Abstand. Dokument DE 102011 108 195 A1 betrifft eine Turbine für einen Abgasturbolader einer Verbrennungskraftmaschine, mit einem Turbinengehäuse, durch welches ein Aufnahmeraum zumindest bereichsweise begrenzt ist, in welchem ein Turbinenrad um eine Drehachse drehbar aufnehmbar und welchem Abgas der Verbrennungskraftmaschine über wenigstens einen Strömungskanal zuführbar ist, in dem wenigstens eine relativ zu dem Turbinengehäuse bewegbare Leitschaufel angeordnet und der in axialer Richtung des Aufnahmeraums zumindest bereichsweise von wenigstens einem in zumindest bereichsweiser Überlappung mit der Leitschaufel angeordneten Wandungsteil der Turbine begrenzt ist. Das Wandungsteil weist wenigstens einen in zumindest bereichsweiser Überlappung mit der Leitschaufel angeordneten ersten Wandungsbereich auf, welcher gegenüber wenigstens einem sich an den ersten Wandungsbereich anschließenden zweiten Wandungsbereich des Wandungsteils zurückversetzt ist. Dokument DE 11 2017 004 220 T5 beschreibt einen Turbolader mit variablem Fassungsvermögen, der Folgendes aufweist: einen Antriebsring mit einem Hauptkörperabschnitt, der eine ringartige Form hat; einen ersten Vorsprungsabschnitt und einen zweiten Vorsprungsabschnitt, die an dem Hauptkörperabschnitt ausgebildet sind und voneinander in der Umfangsrichtung des Hauptkörperabschnittes so beabstandet angeordnet sind, dass sie eine Verbindungsplatte sandwichartig anordnen, an der ein Düsenflügel montiert ist; und einen Ausschnittabschnitt, der an einem Abschnitt des Hauptkörperabschnittes zwischen dem ersten Vorsprungsabschnitt und dem zweiten Vorsprungsabschnitt ausgebildet ist.

### DARSTELLUNG DER ERFINDUNG

Gemäß einem Aspekt der Erfindung wird ein Düsenring für eine Radialturbine bereitgestellt. Der Düsenring umfasst ein erstes Ringelement, ein zweites Ringelement, und eine Vielzahl an Leitschaufeln, die zwischen dem ersten Ringelement und dem zweiten Ringelement angeordnet sind. Das zweite Ringelement umfasst einen sich ausschließlich in radialer Richtung nach innen erstreckenden Endbereich, der an einer dem ersten Ringelement zugewandten Seite eine konvexe Krümmung aufweist.

Somit wird vorteilhafterweise ein Düsenring bereitgestellt, mit welchem die eingangserwähnten herstellungstechnischen Nachteile im Gussverfahren des Gehäuses zumindest teilweise oder sogar vollständig überwunden werden können. Insbesondere, wird vorteilhafterweise ein Düsenring bereitgestellt, mit welchem aufgrund herstellungstechnischer Limitierungen fehlendes Material im Turbinengehäuse substituiert bzw. überbrückt werden kann. Insbesondere ist das zweite Ringelement des Düsenrings vorteilhafterweise derart ausgestaltet, dass gusstechnische Nachteile und Limitierungen für die Realisierung von Radialturbinen mit geringen Turbinenradschaufelhöhen überwunden werden können und strömungstechnische Verbesserungen erreicht werden.

Ein zweiter Aspekt der Erfindung betrifft eine Abgasturbine, insbesondere eine Radialturbine. Die Abgasturbine umfasst ein Turbinengehäuse mit einem Gaseintrittsgehäuse, einen im Gaseintrittsgehäuse angeordneten radialen Gaseinströmungskanal, und einen Düsenring, der in dem radialen Gaseinströmungskanal angeordnet ist. Der Düsenring umfasst ein erstes Ringelement, ein zweites Ringelement, und eine Vielzahl an Leitschaufeln, die zwischen dem ersten Ringelement und dem zweiten Ringelement angeordnet sind. Das zweite Ringelement umfasst einen sich ausschließlich in radialer Richtung nach innen erstreckenden Endbereich, der an einer dem ersten Ringelement zugewandten Seite eine konvexe Krümmung aufweist. Insbesondere erstreckt sich die konvexe Krümmung bis zum radial inneren Ende des zweiten Ringelements. Zwischen einer von dem ersten Ringelement abgewandten Seite des zweite Ringelements und einer gegenüberliegenden Seite des Gaseintrittsgehäuses ist ein axialer Spalt vorhanden.

Somit wird vorteilhafterweise eine Abgasturbine bereitgestellt, die gegenüber dem Stand der Technik verbessert ist. Insbesondere wird eine Abgasturbine bereitgestellt, mit welcher die eingangserwähnten herstellungstechnischen Nachteile im Gussverfahren des Gehäuses zumindest teilweise oder sogar vollständig überwunden werden können.

Ein dritter Aspekt der Erfindung betrifft einen Abgasturbolader mit einer Abgasturbine gemäß den hierein beschriebenen Ausführungsformen bereitgestellt, so dass vorteilhafterweise ein Abgasturbolader bereitgestellt wird, der gegenüber dem Stand der Technik verbessert ist.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigen:
- Figur 1: eine schematische Schnittansicht eines Düsenrings gemäß hierin beschriebenen Ausführungsformen;
- Figur 2: eine schematische Schnittansicht eines Düsenrings gemäß weiteren hierin beschriebenen Ausführungsformen;
- Figur 3: eine schematische Schnittansicht einer Abgasturbine mit einem Düsenring gemäß hierein hierin beschriebenen Ausführungsformen; und
- Figur 4: einen vergrößerten Bereich von Figur 3, in welchem der Düsenring gemäß hierein hierin beschriebenen Ausführungsformen im eingebauten Zustand dargestellt ist.

### DETAILLIERTE BESCHREIBUNG DER FIGUREN

Im Folgenden werden verschiedenen Ausführungsformen beschrieben, von denen in jeder Abbildung ein oder mehrere Beispiele dargestellt sind. Jedes Beispiel dient der Erläuterung und ist nicht als Einschränkung zu verstehen. Beispielsweise können Merkmale, die als Teil einer Ausführungsform dargestellt oder beschrieben sind, auf oder in Verbindung mit jeder anderen Ausführungsform verwendet werden, um eine weitere Ausführungsform zu erhalten. Es ist beabsichtigt, dass die vorliegende Offenlegung solche Modifikationen und Variationen einschließt.

In der folgenden Beschreibung der Zeichnungen beziehen sich die gleichen Referenznummern auf die gleichen oder ähnlichen Komponenten. Im Allgemeinen werden nur die Unterschiede in Bezug auf die einzelnen Ausführungsformen beschrieben. Sofern nicht anders angegeben ist, kann sich die Beschreibung eines Teils oder Aspekts in einer Ausführungsform auch auf ein entsprechendes Teil oder einen entsprechenden Aspekt in einer anderen Ausführungsform beziehen.

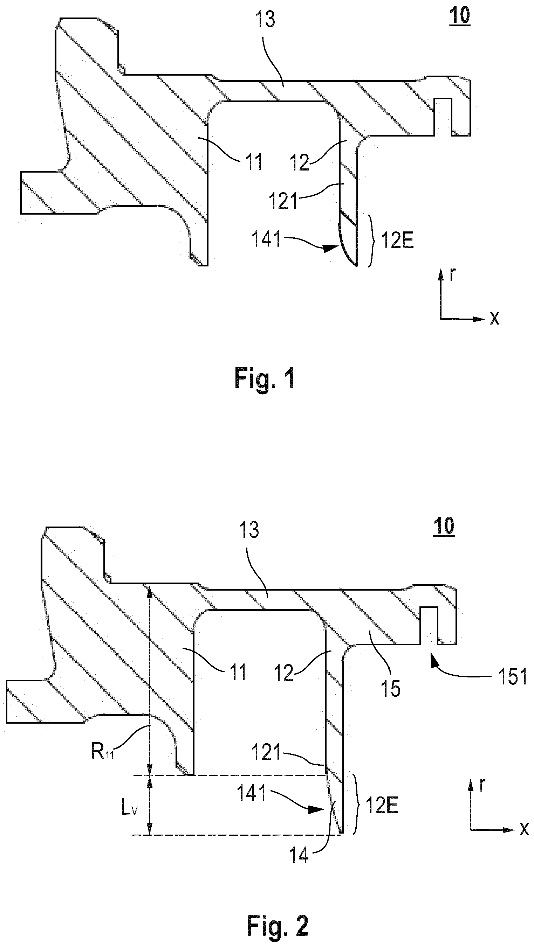

Mit Bezugnahme auf die Figuren 1 bis 4 wird ein Düsenring 10 für eine Radialturbine gemäß Ausführungsformen der vorliegenden Offenbarung beschrieben.

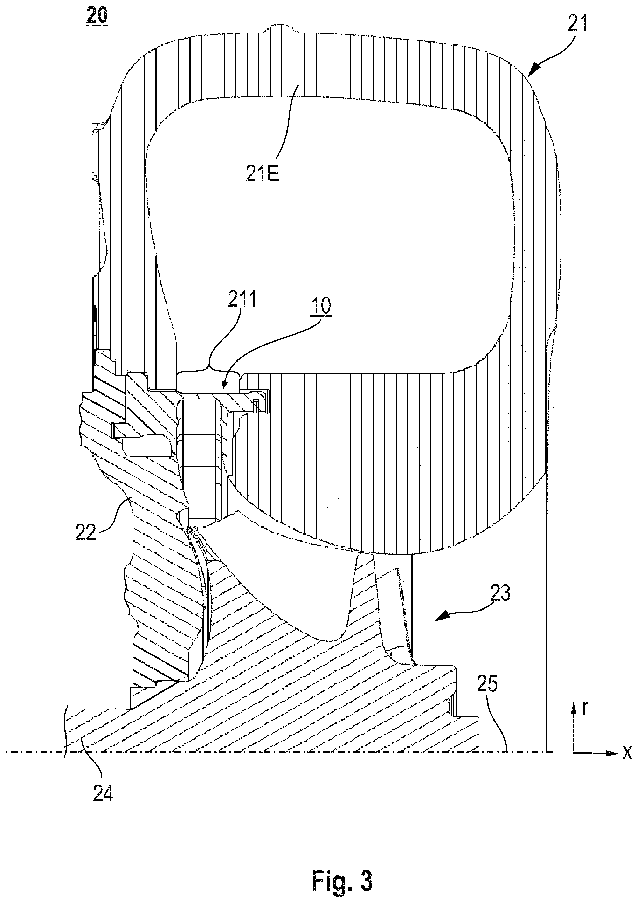

Gemäß einer Ausführungsform, die mit anderen hierin beschriebenen Ausführungsformen kombiniert werden kann, umfasst der Düsenring 10 ein erstes Ringelement 11, ein zweites Ringelement 12, und eine Vielzahl an Leitschaufeln 13, wie es beispielhaft in Figur 1 dargestellt ist. Die Leitschaufeln 13 sind zwischen dem ersten Ringelement 11 und dem zweiten Ringelement 12 angeordnet. Typischerweise befindet sich zwischen dem ersten Ringelement 11 und dem zweiten Ringelement 12 ein Strömungskanal 17. Mit anderen Worten, der Zwischenraum zwischen dem ersten Ringelement 11 und dem zweiten Ringelement 12 stellt einen Strömungskanal 17 bereit. Das erste Ringelement 11 stellt typischerweise die lagergehäuseseitige Begrenzung des Strömungskanals 17 bereit. In Figur 3 ist eine beispielhafte Ausführungsform des Düsenrings 10 im eingebauten Zustand dargestellt, in welcher das Turbinengehäuse 21 und das Lagergehäuse 22 gezeigt sind. Das zweite Ringelement 12 stellt typischerweise die turbinengehäuseseitige Begrenzung des Strömungskanals 17 bereit. Das zweite Ringelement 12 umfasst einen sich ausschließlich in radialer Richtung nach innen erstreckenden Endbereich 12E. Die radiale Richtung r und die axiale Richtung x sind in den Figuren 1 bis 4 mittels entsprechender Pfeile dargestellt. Wie aus den Figuren ersichtlich ist, ist der sich ausschließlich in radialer Richtung nach innen erstreckenden Endbereich 12E ein ausströmseitiger Endbereich. Die Strömungsrichtung S ist den Figuren 1 und 2 durch einen Pfeil angedeutet. Typischerweise ist die Länge des Endbereichs kleiner oder gleich 50% der radialen Gesamtausdehnung des zweiten Ringelements 12. Eine dem ersten Ringelement 11 zugewandten Seite 121 des radial innen liegende Endbereichs 12E des zweiten Ringelements 12 weist eine konvexe Krümmung 141 auf. Aus den Figuren 1,2 und 3 ist ersichtlich, dass die dem ersten Ringelement 11 zugewandten Seite 121 typischerweise eine den Strömungskanal 17 begrenzende Seite des Düsenrings 10 ist. Insbesondere erstreckt sich die konvexe Krümmung 141 bis zum radial inneren Ende des zweiten Ringelements 12. Typischerweise ist die konvexe Krümmung 141 krümmungsstetig.

Somit wird vorteilhafterweise ein Düsenring bereitgestellt, mit welchem die eingangserwähnten gusstechnischen Nachteile bei der Herstellung von Turbinengehäusen zumindest teilweise oder sogar vollständig überwunden werden können. Insbesondere, ermöglichen die hierin beschriebenen Ausführungsformen des Düsenrings eine Substituierung bzw. Überbrückung von aufgrund herstellungstechnischer Limitierungen fehlendem Material im Turbinengehäuse. Insbesondere ist das zweite Ringelement des Düsenrings vorteilhafterweise derart ausgestaltet, dass gusstechnischen Nachteile und Limitierungen für die Realisierung von Radialturbinen mit geringen Turbinenradschaufelhöhen überwunden werden können und strömungstechnische Verbesserungen erreicht werden.

Gemäß einer Ausführungsform, die mit anderen hierin beschriebenen Ausführungsformen kombiniert werden kann, ist das erste Ringelement 11 ein Tragring des Düsenrings 10. Das zweite Ringelement 12 kann ein Deckring des Düsenrings 10 sein. Das erste Ringelement 11, insbesondere der Tragring, kann neben der lagergehäuseseitigen Begrenzung des Strömungskanals 17 auch ausgebildet sein um eine radiale und/oder axiale Positionierungsfunktion für den Düsenring bereitzustellen. Ferner kann das erste Ringelement 11, insbesondere der Tragring, ausgebildet sein um eine Zentrierungsfunktion im Turbinengehäuse bereitzustellen. Darüber hinaus kann das erste Ringelement 11, insbesondere der Tragring, ausgebildet sein um nach Umströmung der Leitschaufeln 13 eine strömungsführende Kontur in Richtung Turbinenrad bereitzustellen.

Gemäß einer Ausführungsform, die mit anderen hierin beschriebenen Ausführungsformen kombiniert werden kann, weist das zweite Ringelement 12 im Vergleich zum ersten Ringelement 11 eine sich ausschließlich in radialer Richtung nach innen erstreckende Verlängerung 14 auf, wie es beispielhaft in Figur 2 dargestellt ist. Somit kann vorteilhafterweise aufgrund herstellungstechnischer Limitierungen fehlendes Material im Turbinengehäuse durch die Verlängerung 14 substituiert bzw. überbrückt werden. Vorteilhafterweise erstreckt sich die Verlängerung 14 über den Strömungskanal 17 des Düsenrings 10 hinaus. Ferner kann die Verlängerung 14 vorteilhafterweise dazu dienen Gusstoleranzen im Turbinengehäuse im Bereich des Übergangs von Turbinengehäuse zu Düsenring auszugleichen. Wie beispielhaft in Figur 2 dargestellt ist umfasst die Verlängerung 14 typischerweise die konvexe Krümmung 141. Insbesondere erstreckt sich die konvexe Krümmung 141 bis zum radial inneren Ende der Verlängerung 14. Somit kann eine verbesserte Strömungsführung in Richtung Turbinenrad bereitgestellt werden.

Gemäß einer Ausführungsform, die mit anderen hierin beschriebenen Ausführungsformen kombiniert werden kann, weist die Verlängerung 14 eine Länge L_{V} auf, die mindestens 10% der radialen Ausdehnung R₁₁ des ersten Ringelements 11 ist, wie es beispielhaft in Figur 2 gezeigt ist. Alternativ kann die Länge L_{V} mindestens 20% der radialen Ausdehnung R₁₁ des ersten Ringelements 11 sein. Beispielsweise kann die Länge L_{V} mindestens 30% der radialen Ausdehnung R₁₁ des ersten Ringelements 11 sein.

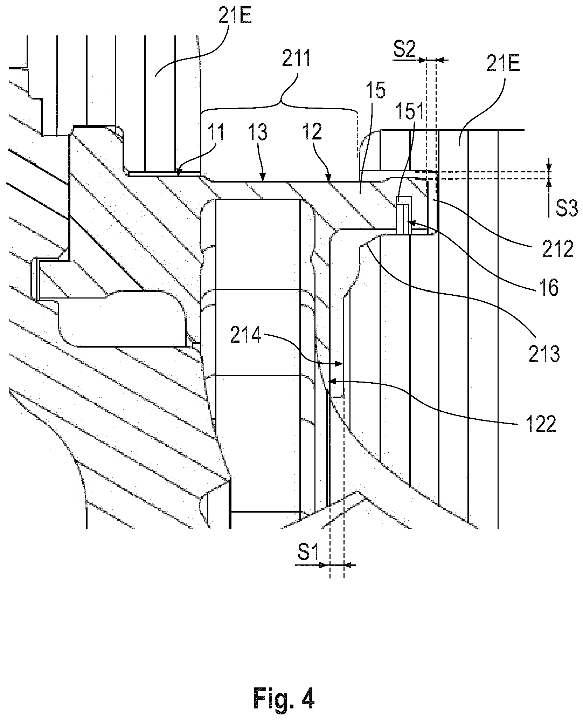

Gemäß einer in Figur 2 dargestellten beispielhaften Ausführungsform, die mit anderen hierin beschriebenen Ausführungsformen kombiniert werden kann, weist das zweite Ringelement 12 ferner einen axialen Fortsatz 15 auf. Der axialen Fortsatz 15 ist ausgelegt zum Einführen in eine axiale Aufnahme 212 eines Gaseintrittsgehäuses 21E eines Turbinengehäuses 21, wie es in Figur 4 beispielhaft dargestellt ist. Typischerweise ist der axiale Fortsatz 15 in einem einströmseitigen Bereich des zweiten Ringelements 12 angeordnet. Gemäß einer nicht explizit dargestellten Ausführungsform kann der axiale Fortsatz 15 in einem ausströmseitigen Bereich des zweiten Ringelements 12 angeordnet sein.

Gemäß einer Ausführungsform, die mit anderen hierin beschriebenen Ausführungsformen kombiniert werden kann, weist der axiale Fortsatz 15 eine Aufnahme 151 für ein Dichtelement 16 auf, wie es beispielhaft in den Figuren 2 und 4 dargestellt ist. Typischerweise ist die Aufnahme 151 für das Dichtelement 16 in einem radial inneren Bereich des axialen Fortsatzes 15 angeordnet. Gemäß einer nicht explizit dargestellten Ausführungsform kann die Aufnahme 151 für das Dichtelement 16 in einem radial äußeren Bereich des axialen Fortsatzes 15 angeordnet sein.

Mit Bezugnahme auf die Figuren 3 und 4 wird eine Abgasturbine 20, insbesondere eine Radialturbine, gemäß Ausführungsformen der vorliegenden Offenbarung beschrieben. Gemäß einer Ausführungsform, die mit anderen hierin beschriebenen Ausführungsformen kombiniert werden kann, umfasst die Abgasturbine 20 ein Turbinengehäuse 21 mit einem Gaseintrittsgehäuse 21E. Unter einer Abgasturbine kann eine Turbinenstufe verstanden werden. Im Gaseintrittsgehäuse 21E ist ein radialer Gaseinströmungskanal 211 angeordnet. Die Abgasturbine umfasst typischerweise ein Turbinenrad 23, welches auf einer in einem Lagergehäuse 22 gelagerten Welle 24 mit einer zentralen Rotationsachse 25 angeordnet ist. Ferner umfasst die Abgasturbine 20 einen Düsenring 10, der in dem radialen Gaseinströmungskanal 211 angeordnet ist. Der Düsenring 10 umfasst ein erstes Ringelement 11, ein zweites Ringelement 12, und eine Vielzahl an Leitschaufeln 13. Die Leitschaufeln 13 sind zwischen dem ersten Ringelement 11 und dem zweiten Ringelement 12 angeordnet. Das zweite Ringelement 12 umfasst einen sich ausschließlich in radialer Richtung nach innen erstreckenden Endbereich 12E. Der Endbereich 12E weist an einer dem ersten Ringelement 11 zugewandten Seite 121 eine konvexe Krümmung 141 auf. Insbesondere erstreckt sich die konvexe Krümmung 141 bis zum radial inneren Ende des zweiten Ringelements 12. Zwischen einer von dem ersten Ringelement 11 abgewandten Seite 122 des zweite Ringelements 12 und einer gegenüberliegenden Seite 214 des Gaseintrittsgehäuses 21E befindet sich ein axialer Spalt S1.

Somit wird vorteilhafterweise eine Abgasturbine bereitgestellt, die gegenüber dem Stand der Technik verbessert ist. Insbesondere wird eine Abgasturbine bereitgestellt, mit welcher die eingangserwähnten herstellungstechnischen Nachteile im Gussverfahren zumindest teilweise oder sogar vollständig überwunden werden können. Insbesondere wird eine Abgasturbine bereitgestellt, mit welcher gusstechnischen Nachteile und Limitierungen für die Realisierung von Radialturbinen mit geringen Turbinenradschaufelhöhen überwunden werden können und strömungstechnische Verbesserungen erreicht werden.

Wie unter Bezugnahme auf die Figuren 2 und 4 beschrieben ist, kann das zweite Ringelement 12 im Vergleich zum ersten Ringelement 11 eine sich ausschließlich in radialer Richtung nach innen erstreckende Verlängerung 14 aufweisen. Ferner kann das zweite Ringelement 12 einen axialen Fortsatz 15 aufweisen, der zumindest teilweise in einer axialen Aufnahme 212 des Gaseintrittsgehäuses 21E angeordnet ist, wie es beispielhaft in Figur 4 dargestellt ist.

Gemäß einer Ausführungsform, die mit anderen hierin beschriebenen Ausführungsformen kombiniert werden kann, weist der axiale Fortsatz 15 eine Aufnahme 151 für ein Dichtelement 16 auf, in welchem ein Dichtelement 16 angeordnet ist. Typischerweise stellt das Dichtelement 16 eine Dichtung zwischen Düsenring 10 und Gaseintrittsgehäuse 21E bereit. Das Dichtelement 16 kann beispielsweise ein metallischer Lamellendichtring sein.

Gemäß einer Ausführungsform, die mit anderen hierin beschriebenen Ausführungsformen kombiniert werden kann, weist die axiale Aufnahme 212 des Gaseintrittsgehäuses 21E eine Fase 213 oder eine Verrundung auf, wie es beispielhaft in Figur 4 dargestellt ist. Typischerweise ist die Fase oder die Verrundung in einem radial inneren Bereich der axialen Aufnahme 212 angeordnet. Das Bereitstellen einer Fase ist für das Einführen des axialen Fortsatzes 15 zusammen mit Dichtelement 16 in die axiale Aufnahme 212 des Gaseintrittsgehäuses 21E von Vorteil.

Gemäß einer Ausführungsform, die mit anderen hierin beschriebenen Ausführungsformen kombiniert werden kann, ist zwischen einer Stirnseite des axialen Fortsatzes 15 und der axialen Aufnahme 212 des Gaseintrittsgehäuses 21E ein axialer Spalt S2 vorhanden.

Gemäß einer Ausführungsform, die mit anderen hierin beschriebenen Ausführungsformen kombiniert werden kann, ist zwischen einer radial äußeren Seite des axialen Fortsatzes 15 und der axialen Aufnahme 212 des Gaseintrittsgehäuses 21E ein radialer Spalt S3 vorhanden.

Die Bereitstellung der hierin beschriebenen Spalte S1, S2 und S3 können insbesondere vorteilhaft sein um Materialbeanspruchungen aufgrund von temperaturbedingten Materialausdehnungen, insbesondere des Düsenrings, zu minimieren.

Es wird darauf hingewiesen, dass die Abgasturbine 20 typischerweise einen Düsenring 10 gemäß einer der hierin beschriebenen Ausführungsformen umfasst. Ferner wird darauf hingewiesen, dass im Lichte der hierein beschriebenen Ausführungsformen vorteilhafterweise ein Abgasturbolader mit einer Abgasturbine gemäß hierein beschriebenen Ausführungsformen bereitgestellt werden kann.

### BEZUGZEICHENLISTE

- 10: Düsenring
- 11: erstes Ringelement/ Tragring
- 12: zweites Ringelement/ Deckring
- 121: dem ersten Ringelement zugewandte Seite des zweiten Ringelements
- 122: dem ersten Ringelement abgewandte Seite des zweiten Ringelements
- 13: Leitschaufeln
- 14: in radialer Richtung nach innen erstreckende Verlängerung 12E radial nach innen gerichteter Endbereich des zweiten Ringelements
- 141: konvexe Krümmung
- 15: axialer Fortsatz
- 151: Aufnahme für Dichtelement
- 16: Dichtelement
- 17: Strömungskanal
- 20: Abgasturbine
- 21: Turbinengehäuse
- 21E: Gaseintrittsgehäuse
- 211: radialer Gaseinströmungskanal
- 212: axiale Aufnahme im Gaseintrittsgehäuse für den axialen Fortsatz
- 213: Fase
- 214: dem ersten Ringelement abgewandte Seite des zweites Ringelements gegenüberliegenden Seite des Gaseintrittsgehäuses
- 22: Lagergehäuse
- 23: Turbinenrad
- 24: Welle
- 25: zentrale Rotationsachse
- S1: axialer Spalt zwischen radialer Verlängerung und Gaseintrittsgehäuse
- S2: axialer Spalt zwischen axialer Verlängerung und axialer Aufnahme des Gaseintrittsgehäuses
- S3: radialer Spalt zwischen axialer Verlängerung und axialer Aufnahme des Gaseintrittsgehäuses
- r: radiale Richtung
- x: axiale Richtung
- S: Strömungsrichtung
- L_{V}: Länge der radialen Verlängerung des zweites Ringelements/ Deckrings
- R₁₁: radiale Ausdehnung des ersten Ringelements

## Patentansprüche

1. Düsenring (10) für eine Radialturbine, wobei der Düsenring (10) ein erstes Ringelement (11), ein zweites Ringelement (12), und eine Vielzahl an Leitschaufeln (13) umfasst, die zwischen dem ersten Ringelement (11) und dem zweiten Ringelement (12) angeordnet sind, wobei das zweite Ringelement (12) einen sich ausschließlich in radialer Richtung nach innen erstreckenden Endbereich (12E) umfasst, der an einer dem ersten Ringelement (11) zugewandten Seite (121) eine konvexe Krümmung (141) aufweist.

2. Düsenring (10) gemäß Anspruch 1, wobei sich die konvexe Krümmung (141) bis zum radial inneren Ende des zweiten Ringelements (12) erstreckt.

3. Düsenring (10) gemäß Anspruch 1 oder 2, wobei das zweite Ringelement (12) im Vergleich zum ersten Ringelement (11) eine sich ausschließlich in radialer Richtung nach innen erstreckende Verlängerung (14) aufweist.

4. Düsenring (10) gemäß Anspruch 3, wobei die Verlängerung (14) eine Länge L_{V} aufweist, die mindestens 10% der radialen Ausdehnung R₁₁ des ersten Ringelements (11) ist, insbesondere wobei die Länge L_{V} mindestens 30% der radialen Ausdehnung R₁₁ des ersten Ringelements (11) ist.

5. Düsenring (10) gemäß einem der Ansprüche 1 bis 4, wobei das zweite Ringelement (12) ferner einen axialen Fortsatz (15) zum Einführen in eine axiale Aufnahme (212) eines Gaseintrittsgehäuses (21E) eines Turbinengehäuses (21) aufweist.

6. Düsenring (10) gemäß Anspruch 5, wobei der axiale Fortsatz (15) eine Aufnahme (151) für ein Dichtelement (16) aufweist, insbesondere wobei die Aufnahme (151) für das Dichtelement (16) in einem radial inneren Bereich oder einem radial äußeren Bereich des axialen Fortsatzes (15) angeordnet ist.

7. Abgasturbine (20), insbesondere Radialturbine, umfassend:
- ein Turbinengehäuse (21) mit einem Gaseintrittsgehäuse (21E),
- einen im Gaseintrittsgehäuse (21E) angeordneten radialen Gaseinströmungskanal (211), und
- einen Düsenring (10) gemäß einem der Ansprüche 1 bis 6, der in dem radialen Gaseinströmungskanal (211) angeordnet ist.

8. Abgasturbine (20) gemäß Anspruch 7, wobei zwischen einer von dem ersten Ringelement (11) abgewandten Seite (122) des zweite Ringelements (12) und einer gegenüberliegenden Seite (214) des Gaseintrittsgehäuses (21E) ein axialer Spalt (S1) vorhanden ist.

9. Abgasturbine (20) gemäß Anspruch 7 oder 8 in Kombination mit Anspruch 5, wobei der axialen Fortsatz (15) zumindest teilweise in einer axialen Aufnahme (212) des Gaseintrittsgehäuses (21E) angeordnet ist.

10. Abgasturbine (20) gemäß einem der Ansprüche 7 bis 9 in Kombination mit Anspruch 6, wobei in der Aufnahme (151) für das Dichtelement (16) ein Dichtelement (16) angeordnet ist, welches eine Dichtung zwischen Düsenring (10) und Gaseintrittsgehäuse (21E) bereitstellt, insbesondere wobei das Dichtelement (16) ein metallischer Lamellendichtring ist.

11. Abgasturbine (20) gemäß Anspruch 9 oder 10, wobei die axiale Aufnahme (212) des Gaseintrittsgehäuses (21E) eine Fase (213) oder eine Verrundung aufweist,

12. Abgasturbine (20) gemäß Anspruch 11, wobei die Fase (213) oder die Verrundung in einem radial inneren Bereich der axialen Aufnahme (212) angeordnet ist.

13. Abgasturbine (20) gemäß einem der Ansprüche 9 bis 12, wobei zwischen einer Stirnseite des axialen Fortsatzes (15) und der axialen Aufnahme (212) des Gaseintrittsgehäuses (21E) ein axialer Spalt (S2) vorhanden ist.

14. Abgasturbine (20) gemäß einem der Ansprüche 9 bis 13, wobei zwischen einer radial äußeren Seite des axialen Fortsatzes (15) und der axialen Aufnahme (212) des Gaseintrittsgehäuses (21E) ein radialer Spalt (S3) vorhanden ist.

15. Abgasturbolader mit einer Abgasturbine (20) gemäß einem der Ansprüche 7 bis 14.

## Claims

1. Nozzle ring (10) for a radial turbine, wherein the nozzle ring (10) comprises a first annular element (11), a second annular element (12), and a plurality of guide vanes (13) which are arranged between the first annular element (11) and the second annular element (12), wherein the second annular element (12) comprises an end region (12E) extending solely inward in the radial direction, which region has a convex curvature (141) on a side (121) facing the first annular element (11).

2. Nozzle ring (10) according to Claim 1, wherein the convex curvature (141) extends as far as the radially inner end of the second annular element (12).

3. Nozzle ring (10) according to Claim 1 or 2, wherein, in contrast to the first annular element (11), the second annular element (12) has a prolongation (14) extending solely inward in the radial direction.

4. Nozzle ring (10) according to Claim 3, wherein the prolongation (14) has a length Lᵥ, which is at least 10% of the radial extent R₁₁ of the first annular element (11), in particular wherein the length Lᵥ is at least 30% of the radial extent R₁₁ of the first annular element (11).

5. Nozzle ring (10) according to any of Claims 1 to 4, wherein the second annular element (12) further comprises an axial extension (15) for insertion in an axial receiving portion (212) of a gas inlet housing (21E) of a turbine housing (21).

6. Nozzle ring (10) according to Claim 5, wherein the axial extension (15) comprises a receiving portion (151) for a sealing element (16), in particular wherein the receiving portion (151) for the sealing element (16) is arranged in a radially inner region or a radially outer region of the axial extension (15).

7. Exhaust turbine (20), in particular radial turbine, comprising:
- a turbine housing (21) having a gas inlet housing (21E),
- a radial gas inflow duct (211) arranged in the gas inlet housing (21E), and
- a nozzle ring (10) according to any of Claims 1 to 6 which is arranged in the radial gas inflow duct (211).

8. Exhaust turbine (20) according to Claim 7, wherein there is an axial gap (S1) between a side (122) of the second annular element (12) which faces away from the first annular element (11) and an opposite side (214) of the gas inlet housing (21E).

9. Exhaust turbine (20) according to Claim 7 or 8 in combination with Claim 5, wherein the axial extension (15) is arranged at least in part in an axial receiving portion (212) of the gas inlet housing (21E).

10. Exhaust turbine (20) according to any of Claims 7 to 9 in combination with Claim 6, wherein, in the receiving portion (151) for the sealing element (16), a sealing element (16) is arranged which provides a seal between the sealing ring (10) and the gas inlet housing (21E), in particular wherein the sealing element (16) is a metal lamellar sealing ring.

11. Exhaust turbine (20) according to Claim 9 or 10, wherein the axial receiving portion (212) of the gas inlet housing (21E) comprises a bevel (213) or a rounding.

12. Exhaust turbine (20) according to Claim 11, wherein the bevel (213) or the rounding is arranged in a radially inner region of the axial receiving portion (212).

13. Exhaust turbine (20) according to any of Claims 9 to 12, wherein there is an axial gap (S2) between an end face of the axial extension (15) and the axial receiving portion (212) of the gas inlet housing (21E).

14. Exhaust turbine (20) according to any of Claims 9 to 13, wherein there is a radial gap (S3) between a radially outer side of the axial extension (15) and the axial receiving portion (212) of the gas inlet housing (21E) .

15. Turbocharger comprising an exhaust turbine (20) according to any of Claims 7 to 14.

## Revendications

1. Anneau de buses (10) pour une turbine radiale, l'anneau de buses (10) comprenant un premier élément annulaire (11), un deuxième élément annulaire (12) et une pluralité d'aubes directrices (13) agencées entre le premier élément annulaire (11) et le deuxième élément annulaire (12), le deuxième élément annulaire (12) comprenant une zone d'extrémité (12E) s'étendant exclusivement vers l'intérieur dans la direction radiale, qui présente une courbure convexe (141) sur un côté (121) tourné vers le premier élément annulaire (11).

2. Anneau de buses (10) selon la revendication 1, dans lequel la courbure convexe (141) s'étend jusqu'à l'extrémité radialement intérieure du deuxième élément annulaire (12).

3. Anneau de buses (10) selon la revendication 1 ou 2, dans lequel le deuxième élément annulaire (12) présente, par rapport au premier élément annulaire (11), un prolongement (14) s'étendant exclusivement vers l'intérieur dans la direction radiale.

4. Anneau de buses (10) selon la revendication 3, dans lequel le prolongement (14) présente une longueur Lᵥ qui est d'au moins 10 % de l'étendue radiale R₁₁ du premier élément annulaire (11), notamment dans lequel la longueur Lᵥ est d'au moins 30 % de l'étendue radiale R₁₁ du premier élément annulaire (11).

5. Anneau de buses (10) selon l'une quelconque des revendications 1 à 4, dans lequel le deuxième élément annulaire (12) comprend en outre un appendice axial (15) destiné à être inséré dans un logement axial (212) d'un boîtier d'entrée de gaz (21E) d'un boîtier de turbine (21).

6. Anneau de buses (10) selon la revendication 5, dans lequel l'appendice axial (15) présente un logement (151) pour un élément d'étanchéité (16), notamment dans lequel le logement (151) pour l'élément d'étanchéité (16) est agencé dans une zone radialement intérieure ou une zone radialement extérieure de l'appendice axial (15).

7. Turbine à gaz d'échappement (20), notamment turbine radiale, comprenant :
- un boîtier de turbine (21) avec un boîtier d'entrée de gaz (21E),
- un canal d'afflux de gaz radial (211) agencé dans le boîtier d'entrée de gaz (21E), et
- un anneau de buses (10) selon l'une quelconque des revendications 1 à 6, qui est agencé dans le canal d'afflux de gaz radial (211).

8. Turbine à gaz d'échappement (20) selon la revendication 7, dans laquelle un espace axial (S1) est présent entre un côté (122) du deuxième élément annulaire (12) détourné du premier élément annulaire (11) et un côté opposé (214) du boîtier d'entrée de gaz (21E).

9. Turbine à gaz d'échappement (20) selon la revendication 7 ou 8 en combinaison avec la revendication 5, dans laquelle l'appendice axial (15) est agencé au moins en partie dans un logement axial (212) du boîtier d'entrée de gaz (21E).

10. Turbine à gaz d'échappement (20) selon l'une quelconque des revendications 7 à 9 en combinaison avec la revendication 6, dans laquelle un élément d'étanchéité (16) est agencé dans le logement (151) pour l'élément d'étanchéité (16), lequel assure l'étanchéité entre l'anneau de buses (10) et le boîtier d'entrée de gaz (21E), l'élément d'étanchéité (16) étant notamment un anneau d'étanchéité à lamelles métallique.

11. Turbine à gaz d'échappement (20) selon la revendication 9 ou 10, dans laquelle le logement axial (212) du boîtier d'entrée de gaz (21E) présente un chanfrein (213) ou un arrondi,

12. Turbine à gaz d'échappement (20) selon la revendication 11, dans laquelle le chanfrein (213) ou l'arrondi est agencé dans une zone radialement intérieure du logement axial (212).

13. Turbine à gaz d'échappement (20) selon l'une quelconque des revendications 9 à 12, dans laquelle un espace axial (S2) est présent entre un côté frontal de l'appendice axial (15) et le logement axial (212) du boîtier d'entrée de gaz (21E).

14. Turbine à gaz d'échappement (20) selon l'une quelconque des revendications 9 à 13, dans laquelle un espace radial (S3) est présent entre un côté radialement extérieur de l'appendice axial (15) et le logement axial (212) du boîtier d'entrée de gaz (21E).

15. Turbocompresseur à gaz d'échappement avec une turbine à gaz d'échappement (20) selon l'une quelconque des revendications 7 à 14.
